Europäisches Patentamt

(19) European Patent Office

Office européen des brevets

(11) EP 1 014 281 A2

(12) EUROPEAN PATENT APPLICATION

(43) Date of publication:
28.06.2000 Bulletin 2000/26

(51) Int Cl.⁷: $G06F\ 17/30$

(21) Application number: 99309758.3

(22) Date of filing: 03.12.1999

(84) Designated Contracting States:
AT BE CH CY DE DK ES FI FR GB GR IE IT LI LU
MC NL PT SE
Designated Extension States:
AL LT LV MK RO SI

(30) Priority: 22.12.1998 GB 9828241

(71) Applicant: NCR INTERNATIONAL INC.
Dayton, Ohio 45479 (US)

(72) Inventors:
• Nakisa, Ramin Charles
  Little Chalfont, Buckinghamshire HP6 6QH (GB)
• Hoggart, Clive
  London SW12 8LL (GB)

(74) Representative: Cleary, Fidelma et al
International IP Department
NCR Limited
206 Marylebone Road
London NW1 6LY (GB)

(54) **Method and apparatus for estimating a missing observation in a database**

(57) A method of estimating a missing observation in a data set comprises creating a probabilistic model that defines the likelihood of the data set given a plurality of model parameters in order to model a within parameter distribution. Then a Bayesian nonparametric prior is selected for the distribution of the observations and a Bayesian nonparametric model is dervied from the dataset and the nonparametric prior. The full conditional distribution for the missing observation is then derived and the missing observation is sampled from the full conditional distribution. The missing observation may be derived using a maximum likelihood technique.

EP 1 014 281 A2

## Description

The present invention relates to a method and apparatus for estimating a missing observation in a database. The invention has particular, but not exclusive application to pre-processing a database before **or during** analysis as part of a database marketing exercise.

Database marketing is a technique in which a company wishing to contact potential customers about buying a product or a service use a database to determine which potential customers are most likely to take up the offer. In this way the budget of a marketing campaign can be more effectively utilised than if potential customers were to be contacted at random. Many techniques are available to perform the analysis of the data held. These approaches differ in effectiveness but all suffer from a common problem of missing data.

It is easy to imagine that missing data will seriously degrade the accuracy of predictions made about potential customers. For example a bank may hold data on existing customers such as age, salary and whether or not they have bought a personal equity plan (PEP) through the bank. The bank wishes to contact (by telephone, letter or e-mail, for example) those customers who have not yet bought a PEP through the bank. However, the marketing exercise has a fixed budget so it is not possible to contact all of those customers who have not yet bought a PEP. The bank (in this simplified example) has only two pieces of data upon which to assess the likelihood of those customers who have not yet bought a PEP of doing so in response to a contact from the bank, namely age and salary.

If one of these data elements (or observations) are missing then there is very little information available to derive the likelihood of a sale of a PEP. At present the missing observations are replaced by the average value of all of the corresponding data fields for the remaining customers. For instance, if the salary is not known then the missing values are filled with the mean salary for the sample group (such as existing customers).

This is clearly a less than satisfactory technique to deal with the problem and it is an object of the present invention to provide a technique for estimating such missing observations that is more accurate than the known technique.

According to a first aspect of the present invention there is provided a method of estimating a missing observation in a data set which data set comprises at least two observation fields for each of a plurality of entities, the method comprising creating a probabilistic model that defines the likelihood of the data set given a plurality of model parameters, applying a prior distribution over the plurality of model parameters, selecting a Bayesian nonparametric prior for the distribution of the observations, generating a Bayesian nonparametric model from the dataset and the nonparametric prior, deriving the full conditional distribution for the missing observation and MCMC sampling the missing observation from the full conditional distribution.

The probabilistic model is used to model the within entity (e.g. customer) variation while the nonparametric model is used to model the between entity variation. A nonparametric model is thus derived from the whole of the database. Often the databases will be vast - containing data on 20,000 or more individuals- and this allows a model of high accuracy to be derived. When this model is then used to estimate the missing observations, the accuracy of those estimates will be much improved (in the majority of cases) over the prior art technique. The nonparametric model can model the distribution more accurately than any parametric model.

The model may be expanded to operate upon a greater number of fields in a database. The estimate may be derived using the other fields corresponding to the entity whose data field is missing.

The accuracy of the estimates clearly relies on the accuracy of the model which, in turn, relies on the accuracy of the prior distribution. For a continuous distribution such as salary the use of a Polya tree is favoured, see Muliere and Walker "A nonparametric Approach to Survival Analysis using Polya Trees" published in the Scandinavian Journal of Statistics 1997, 24 pp. 331-340. For discrete distributions, the Dirichlet process is preferred.

As the reader will appreciate, the multidimensional integrals that result from Bayesian analysis are virtually always impractical or impossible to solve using analytical methods. Sufficient computing power is now widely available, however, to perform the necessary calculations to derive samples from the posterior distribution using numerical techniques. The preferred approach in the present case is to use a Gibbs Sampler.

On a point of terminology it should be pointed out that a nonparametric Bayesian model does have parameters but the term is used to distinguish it from parametric models which have a <u>fixed</u> number of parameters. In a nonparametric model the number of parameters is determined, inter alia, by the observed data.

According to a second aspect of the present invention there is provided apparatus for estimating a missing observation in a data set which data set comprises at least two observation fields for each of a plurality of entities, the apparatus comprising a probabilistic model that defines the likelihood of the data set given a plurality of model parameters, means for applying a prior distribution over the plurality of model parameters, means for selecting a Bayesian nonparametric prior for the distribution of the observations, means for generating a Bayesian nonparametric model from the dataset and the nonparametric prior, means for deriving the full conditional distribution for the missing observation and means for MCMC sampling the missing observation from the full conditional distribution.

According to a third aspect of the present invention there is provided a data carrier comprising a software routine to cause a data processor to carry out a method of estimating a missing observation in a data set which data set comprises at least two observation fields for each of a plurality of entities, the method comprising creating a probabilistic model that defines the likelihood of the data set given a plurality of model parameters, applying a prior distribution over the plurality of model parameters, selecting a Bayesian nonparametric prior for the distribution of the observations, generating a Bayesian nonparametric model from the dataset and the nonparametric prior, deriving the full conditional distribution for the missing observation and MCMC sampling the missing observation from the full conditional distribution.

The preferred features discussed in the context of the first aspect of the present invention are equally applicable to the second and third aspects of the invention..

The present invention will now be described, by way of non-limiting example, with reference to the accompanying drawings, in which:

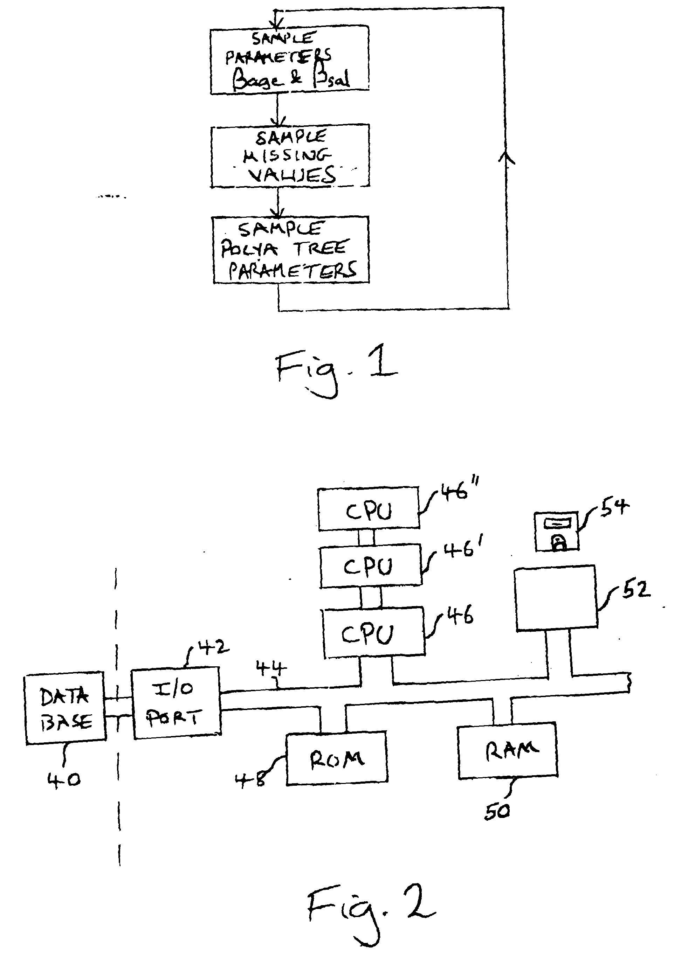

Figure 1 shows a schematic overview of part of the process according to an embodiment of the invention,

Figure 2 shows a block schematic diagram of a data processing apparatus for executing an embodiment of the present invention,

Figure 3 shows a flow chart of the steps performed by the arrangement in Figure 2 in accordance with an embodiment of the invention, and

Figure 4 shows a variation of some of the steps in Figure 3.

Before discussing the features of the present invention an example of the type of analysis to which the data contained in a suitable database are put will be given.

Banks hold a large amount of data on a large number of customers. In a simplified example, this would include the customer's age $X_{age}$, their salary $X_{sal}$ and whether or not they have bought a particular product, such as a PEP. This last is represented by a variable y which takes a value of 1 if a product has been bought and a value of 0 if a product has not been bought.

As a first step a probability is assigned to the value of y in which y takes the value 1 with probability $\theta$ and the value 0 with probability $(1-\theta)$. Since $\theta$ is a probability it takes values only in the region [0, 1]. To analyse this we transform $\theta$ using the logit function defined as:

$$\text{logit } \theta = \log (\theta/(1-\theta))$$

which takes values in the region $(-\infty, \infty)$. A linear regression model is applied as follows:

$$\text{logit } \theta_1 = \beta_0 + \beta_{sal}\, x_{sal,1} + \beta_{age}\, x_{age,1}$$

$$\text{logit } \theta_2 = \beta_0 + \beta_{sal}\, x_{sal,2} + \beta_{age}\, x_{age,2}$$

.

.

$$\text{logit } \theta_n = \beta_0 + \beta_{sal}\, x_{sal,n} + \beta_{age}\, x_{age,n}$$

in which $x_{sal,i}$ and $x_{age,i}$ are the salaries and the ages of the $i^{th}$ customer respectively. $\theta_i$ is the probability that the $i^{th}$ customer buys the product.

The posterior distribution of the $\beta$s is derived given the **explanatory** variables x from each customer and their response y. From the posterior distribution of the $\beta$s, $\theta$ can be calculated from the values of x for each customer. The exact technique applied does not form part of the present invention and any suitable regression model may be applied.

However, as discussed above, a problem arises when the values of x are incomplete. Prior art techniques to address this problem are somewhat less than satisfactory. The present inventors have identified a somewhat better technique to address the problem.

In brief, the missing values are treated in the same way as unknown parameter values. As is known, prior distributions of parameters are updated in response to the data using Bayesian analysis. The present invention selects a model and a prior distribution for the missing data points which are also updated. The prior distribution for the missing data points can simply be the average of the data set for that observation.

For a continuous variable such as salary, the prior distribution is preferably a Polya tree.

The Bayesian analysis is then conducted using a Gibbs sampler to provide the posterior distribution.

Once the posterior distribution has been obtained, the full conditional of a single missing salary observation is defined as follows:

$$p\,[y\,|\beta_{sal},\,\beta_{age},\,x_{age},\,x_{sal}] \times p\,[x_{sal}\,|\,x_{-sal},\,x_{age}]$$

where the former p term is the within customer distribution, the latter term is the between customer distribution and where $x_{-sal}$ denotes the salaries of all of the other customers.

If we assume that salary is independent of age then the second p term simplifies to $p(x_{sal}\,|\,x_{-sal})$.

The full conditional is defined by the propensity distribution for the missing salary value given the parameters for salary and age from the linear regression model, the age of the customer whose salary is unknown and whether or not they have bought a PEP multiplied by the propensity distribution of the missing **salary** value given the salary values relating to all of the other customers whose data is held in the database. In the case of a regression model, the within customer distribution is standard and the between customer distribution is the posterior distribution of salary given the observed salaries of the other customers.

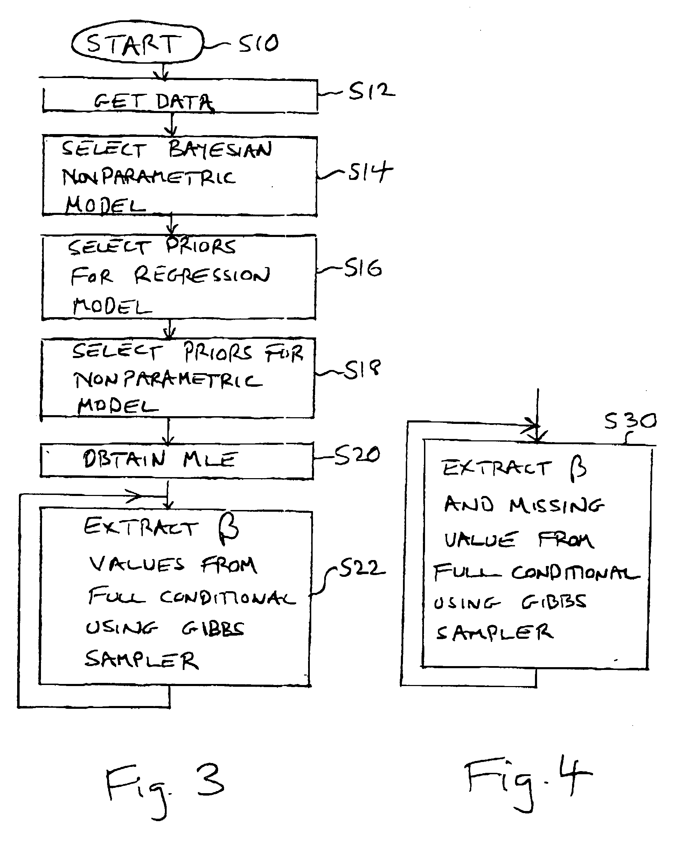

Figure 2 shows a block schematic diagram of an apparatus in accordance with an embodiment of the invention. A port 42 connects a database 40 (which may be external to the apparatus) to an internal bus 44. Also connected to the bus are a central processing unit 46, a read only memory 48 and a random access memory 50. Given the quantity of calculations and complexity of certain of the calculations, it is likely that the CPU will effectively be provided by a highly parallel arrangement illustrated schematically here as two further central processing units 46', 46". The ROM 48 stores the operating system while the RAM 50 is used as operating memory and for short-term storage of results. Optionally, the data processing system may include a magnetic or optical disk drive 52 for reading operating software from a disk 54 in accordance with an embodiment of the invention.

The following gives the full conditionals for n missing values in the explanatory variables X.

$p [\beta | X, X_1', X_2', Y]$ is the full conditional to sample for the model parameters. This can be split into a number of steps to sample for the parameters separately. However, in the case of logistic regression all of the β values can be sampled efficiently together. To derive the missing values X' the following full conditionals would be used.

$$[X_1' | X, \beta, X_{-1}', Y]$$

$$[X_2' | X, \beta, X_{-2}', Y]$$

$$.$$

$$.$$

$$[X_n' | X, \beta, X_{-n}', Y]$$

where X are the observed explanatory variables, $X_n'$ are the missing explanatory variables, Y is the response and $X_n'$ are $[X_1', X_2', \ldots \ldots X_{n-1}']$

The sampling for model parameters and missing values can be done in any order.

Figure 3 shows a flow diagram of the steps to be performed by the processing apparatus of Figure 2 in accordance with an embodiment of the invention. After START at step S 10, the data processor retrieves the data at step S 12 from the database which may be remote from the apparatus. At step S14 a Bayesian nonparametric model is selected to model the between entity variation. Priors for the nonparametric model and a regression model are obtained at steps S16 and S18. A maximum likelihood estimation (MLE) is derived at step S20 for the missing observations. These are then subject to Bayesian analysis, shown here as a Gibbs sampler, at step S22. A loop is shown to indicate the iteration performed by this sampler. While the MLE approach is fast it can suffer from a lack of accuracy.

An alternative approach is to derive both the missing observations and the model parameters by Gibbs sampling as set out in the full conditional equations given above. This is shown in Figure 4 is which step S30 replaces steps S20 and S22.

Other techniques will be apparent to the skilled reader to provide the Bayesian analysis.

While estimating the missing observations has been described it will be understood that the invention can advantageously be applied simultaneously with a probabilistic model used to analyse the data and to obtain a response as shown in the above-described full conditionals.

The present invention has been described using a banking example but it will be understood that it can be applied to any database having missing data.

**Claims**

1.  A method of estimating a missing observation in a data set which data set comprises at least two observation fields for each of a plurality of entities, the method comprising creating a probabilistic model that defines the likelihood of the data set given a plurality of model parameters, applying a prior distribution over the plurality of model parameters, selecting a Bayesian nonparametric prior for the distribution of the observations, generating a Bayesian nonparametric model from the dataset and the nonparametric prior, deriving the full conditional distribution for the missing observation and MCMC sampling the missing observation from the full conditional distribution.

2.  A method as claimed in claim 1, wherein the prior for observations comprises the average value of observations from the dataset.

3.  A method as claimed in claim 1 or claim 2, wherein the probabilistic model is a regression model.

4.  A method as claimed in claim 1, claim 2 or claim 3, wherein the prior for observations is a Polya tree.

5.  A method as claimed in claim 1, claim 2 or claim 3, wherein the prior for observations is formed by the Dirichlet method.

6.  A method as claimed in any one of the preceding claims, wherein the sampling is effected using a Gibbs sampler.

**7.** Apparatus for estimating a missing observation in a data set which data set comprises at least two observation fields for each of a plurality of entities, the apparatus comprising a probabilistic model that defines the likelihood of the data set given a plurality of model parameters, means for applying a prior distribution over the plurality of model parameters, means for selecting a Bayesian nonparametric prior for the distribution of the observations, means for generating a Bayesian nonparametric model from the dataset and the nonparametric prior, means for deriving the full conditional distribution for the missing observation and means for MCMC sampling the missing observation from the full conditional distribution.

**8.** Apparatus as claimed in claim 7, wherein the means for deriving the prior for observations derives the average value of observations from the dataset.

**9.** Apparatus as claimed in claim 7 or claim 8, wherein the probabilistic model is a linear regression model.

**10.** Apparatus as claimed in claim 7, claim 8 or claim 9, wherein the prior for observations is a Polya tree.

**11.** Apparatus as claimed in claim 7, claim 8 or claim 9, wherein the prior for observations is formed by the Dirichlet method.

**12.** Apparatus as claimed in any one of the claims 7 to 11, wherein the means for sampling comprises a Gibbs sampler.

**13.** A data carrier comprising a software routine to cause a data processor to carry out a method of estimating a missing observation in a data set which data set comprises at least two observation fields for each of a plurality of entities, the method comprising creating a probabilistic model that defines the likelihood of the data set given a plurality of model parameters, applying a prior distribution over the plurality of model parameters, selecting a Bayesian nonparametric prior for the distribution of the observations, generating a Bayesian nonparametric model from the dataset and the nonparametric prior, deriving the full conditional distribution for the missing observation and MCMC sampling the missing observation from the full conditional distribution.

Fig. 1

Fig. 2

Fig. 3

Fig. 4